# EUROPEAN PATENT APPLICATION

(11) **EP 2 520 685 A2**
(43) Date of publication of application: **07.11.2012**
(21) Application number: 10841163.8
(22) Date of filing: 16.12.2010
(51) Int. Cl.: C22C 38/18, C21D 8/00, B22D 11/06, B21B 1/46

(54) **MARTENSITIC STAINLESS STEEL PRODUCED BY A TWIN ROLL STRIP CASTING PROCESS AND METHOD FOR MANUFACTURING SAME**

(30) Priority: 28.12.2009 KR 20090131828
(71) Applicant: Posco, Pohang-si Gyeongsangbuk-do 790-300 (KR)
(72) Inventor: JEONG, Seong-In, Pohang-si Gyeongsangbuk-do 790-300 (KR); LEE, Yun-Yong, Pohang-si Gyeongsangbuk-do 790-300 (KR); LEE, Il-Goo, Pohang-si Gyeongsangbuk-do 790-300 (KR); PARK, Sung-Jin, Pohang-si Gyeongsangbuk-do 790-300 (KR); MOON, Hee-Kyung, Pohang-si Gyeongsangbuk-do 790-300 (KR); KANG, Tae-Wook, Pohang-si Gyeongsangbuk-do 790-300 (KR)
(74) Representative: Zech, Stefan Markus
(86) International application number: PCT/KR2010/009004
(87) International publication number: WO 2011/081331

(57) **Abstract**

The present invention relates to a martensitic stainless steel produced by a twin roll strip casting process and a method for manufacturing the same. The key technical features of the present invention are for a martensitic stainless hot rolled steel sheet having superior crack resistance, manufactured by a twin roll strip casting process, and a method for manufacturing the same, wherein the martensitic stainless hot rolled steel sheet comprises, by weight%, C:0.1 to 1.5%, Cr:12 to 15%, Ni:1% or lower, Ti:0.005 to 0.1%, and the balance Fe and unavoidably added impurities, and wherein a primary chrome carbide precipitated at a grain boundary is fragmented and refined. The key technical features of the present invention are also for a high hardness martensitic stainless cold rolled steel sheet manufactured by annealing and cold rolling the hot rolled steel sheet, and a method for manufacturing the same. According to the present invention, a twin roll strip casting process is applied, and grain boundary strengthening elements are added to prevent center segregation, crack and strip breakage during casting, thereby ensuring the stability of the casting process. In addition, a refined and uniform structure is formed in a steel, and high hardness knives or tools having edges with high quality can be manufactured from the steel.

## Description

### Technical Field

The present invention relates to a martensitic stainless steel produced by a twin roll strip casting process and a method of manufacturing the same, and more particularly to a martensitic stainless steel wherein center segregation, cracking and strip breakage have been suppressed during casting thus ensuring casting stability and also a refined cast structure has been obtained thus enabling formation of products having high hardness and superior edge quality, and to a method of manufacturing the same.

### Background Art

Typically martensitic stainless steel has superior corrosion resistance, hardness and wear resistance, and is thus employed in the production of a variety of tools or knives.

In the case of producing martensitic stainless steel using a continuous casting process, the severity of coarse center segregation at the central portion of a cast product is proportional to an increase in the amount of carbon, and a solid-liquid coexisting region is widely formed undesirably weakening castability. Hence, martensitic stainless steel has been mainly manufactured using an ingot casting process in which an ingot is made into a slab, followed by performing reheating and hot rolling to produce a hot rolled coil, which is then subjected to a BAF (Batch Annealing Furnace) process, pickling and cold rolling.

However, the use of the above ingot casting process is problematic because coarse center segregation takes place in the slab due to the slow cooling rate, and the center segregation is not well removed in the subsequent heat treatment process and is thus left behind in the hot rolled steel sheet, undesirably causing lamination defects in the course of cutting the strip. Furthermore, coarse primary chromium carbides are precipitated at grain boundaries, thus generating cracks or strip breakage in the steel sheet in the post-treatment process.

To solve the above problems, techniques are known in which the annealing temperature is increased and the annealing time is kept long in the BAF process subsequent to the hot rolling in order to dissolve carbides, but are problematic because a cost investment in the furnace is required undesirably increasing the production cost and drastically decreasing productivity.

Also, low-temperature casting and low-rate casting methods have been proposed, which enable the formation of a granular equiaxed structure at the central portion of the cast product and the rapid formation of a solidified layer of a cast strand to thus reduce center segregation, but the nozzle may experience blockage during casting, undesirably leading to unstable work and lowered productivity.

Therefore, there are the needs for high-quality martensitic stainless steel and a method of manufacturing the same, wherein center segregation is suppressed upon casting and primary chromium carbides are finely precipitated at grain boundaries, thus ensuring casting stability thanks to superior crack resistance.

### Disclosure

### Technical Problem

Accordingly, the present invention has been made keeping in mind the above problems encountered in the related art, and an object of the present invention is to provide a martensitic stainless hot rolled steel sheet having superior crack resistance and a method of manufacturing the same, wherein a twin roll strip casting process is applied and grain boundary strengthening elements are added thus suppressing center segregation, cracking and strip breakage thereby ensuring casting stability, and also to provide a martensitic stainless cold rolled steel sheet having high hardness and a method of manufacturing the same, wherein the uniform distribution of a refined structure in steel may be obtained, from which knives or tools having high hardness and edges with high quality may be produced.

### Technical Solution

The present invention provides a martensitic stainless hot rolled steel sheet having superior crack resistance, manufactured by a twin roll strip casting process and comprising 0.1 ∼ 1.5% of C, 12 ∼ 15% of Cr, 1% or less of Ni, 0.005 ∼ 0.1% of Ti, and a balance of Fe and other inevitable impurities by wt%, wherein primary chromium carbides precipitated at grain boundaries are fragmented and refined.

As such, the martensitic stainless hot rolled steel sheet may further comprise either or both of 0.005 ∼ 0.1 wt% of Mo and 0.005 ∼ 1.0 wt% of V.

As well, the primary chromium carbides may have a thickness of 0.5 µm or less.

Furthermore, center pores may be removed from the martensitic stainless hot rolled steel sheet.

Also, the equiaxed structure ratio of the cross-sectional structure of the martensitic stainless hot rolled steel sheet may be 5 ∼ 30%.

In addition, the present invention provides a martensitic stainless cold rolled steel sheet having high hardness, manufactured by a twin roll strip casting process and comprising 0.1 ∼ 1.5% of C, 12 ∼ 15% of Cr, 1% or less of Ni, 0.005 ∼ 0.1% of Ti, and a balance of Fe and other inevitable impurities by wt%, wherein spherical secondary chromium carbides are finely distributed.

As such, the martensitic stainless cold rolled steel sheet may further comprise either or both of 0.005 ∼ 0.1 wt% of Mo and 0.005 ∼ 1.0 wt% of V.

As well, the secondary chromium carbides may have a size of 5 µm or less, and there may be 30 or more chromium carbides having the above size per area of 100 µm².

The martensitic stainless cold rolled steel sheet may have a hardness of 100 ∼ 300 Hv.

In addition, the present invention provides a method of manufacturing a martensitic stainless cold rolled steel sheet having high hardness, comprising casting molten steel comprising 0.1 ∼ 1.5% of C, 12 ∼ 15% of Cr, 1% or less of Ni, 0.005 ∼ 0.1% of Ti, and a balance of Fe and other inevitable impurities by wt% into a strip in a twin roll strip casting process, rolling the strip at a rolling rate of 5 ∼ 50% using an inline rolling machine thus producing a hot rolled steel sheet, and subjecting the hot rolled steel sheet to a BAF (Batch Annealing Furnace) process at 650 ∼ 950°C in a reducible gas atmosphere and then to cold rolling, wherein the cold rolling is performed multiple times and intermediate annealing is performed between multiple times of the cold rolling.

The molten steel may further comprise either or both of 0.005 ∼ 0.1 wt% of Mo and 0.005 ∼ 1.0 wt% of V.

### Advantageous Effects

According to the present invention, a twin roll strip casting process is applied and grain boundary strengthening elements are added thus preventing center segregation, cracking and strip breakage upon casting to thereby ensure casting stability, and also the uniform distribution of a refined structure in steel can be obtained, from which knives or tools having high hardness and edges with high quality can be produced.

### Description of Drawings

FIG. 1 illustrates the configuration wherein a twin roll strip casting process is performed;
FIG. 2 illustrates cracks generated in martensitic stainless steel during casting;
FIG. 3 illustrates the crack fracture surface of martensitic stainless steel during casting;
FIG. 4 illustrates primary chromium carbides precipitated at grain boundaries of martensitic stainless steel;
FIG. 5 illustrates an equilibrium phase diagram of martensitic stainless steel;
FIG. 6 illustrates a graph of the equiaxed structure ratio and crack generation depending on the amount of Ti in martensitic stainless steel;
FIG. 7 illustrates center pores of a cross-sectional structure of martensitic stainless steel depending on the rolling rate of hot rolling, wherein (a) illustrates the case before hot rolling, and (b) illustrates the case after hot rolling at a rolling rate of 25%;
FIG. 8 illustrates grain diameter depending on the amount of Ti in a martensitic stainless hot rolled steel sheet;
FIG. 9 illustrates primary chromium carbides precipitated at grain boundaries depending on the amount of Ti in the martensitic stainless hot rolled steel sheet; and
FIG. 10 illustrates secondary chromium carbides of a martensitic stainless cold rolled steel sheet according to the present invention.

### <Description of the Reference Numerals in the Drawings>

1: tundish 2: nozzle
3: casting roll 4: molten steel
5: edge dam 6: brush roll
7: strip 8: loop pit
9: meniscus shield 10: pinch roll
11: inline rolling machine (IRM)

### Mode for Invention

Hereinafter, martensitic stainless steel according to the present invention will be described in detail with reference to the drawings.

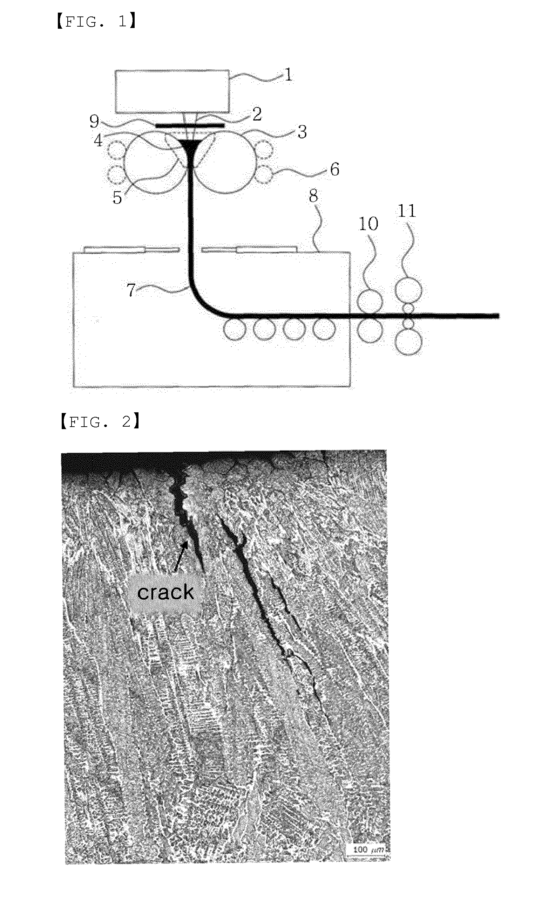

According to the present invention, a martensitic stainless hot rolled steel sheet having superior crack resistance is manufactured using a twin roll strip casting process. As illustrated in FIG. 1, the twin roll strip casting process is performed by supplying molten steel 4 between a pair of rotating casting rolls 3 so that a strip having a thickness of ones of mm is directly continuously produced from the molten steel.

Specifically, the molten steel 4 having a predetermined composition is supplied by way of a nozzle 2 between the casting rolls 3 which are responsible for cooling while rotating in opposite directions and thus solidifies thus forming a solidified shell which is then depressed using a roll nip, thus producing a strip 7. The strip 7 thus produced is guided by pinch rolls 10, and rolled by means of rolling rolls of an inline rolling machine (IRM) 11 and thus manufactured into a martensitic stainless hot rolled steel sheet.

When martensitic stainless steel is conventionally produced using a continuous casting process or an ingot casting process, center segregation is formed undesirably generating linear defects or planar separation, and also coarse primary chromium carbides are precipitated at grain boundaries undesirably generating cracks or strip breakage in the steel sheet upon post-treatment. However, when martensitic stainless steel is produced using a twin roll strip casting process, the molten steel near the roll nip is depressed and thus squeezing flow takes place, so that molten steel in the zone where the concentration of solute of the central portion occurs is squeezed out, thus removing center segregation. Moreover, the cooling rate at which the molten steel is solidified is fast thus refining grains of grain boundaries to thereby reduce the precipitation of primary chromium carbides. Upon casting, center segregation and cracking may be suppressed thus ensuring casting stability.

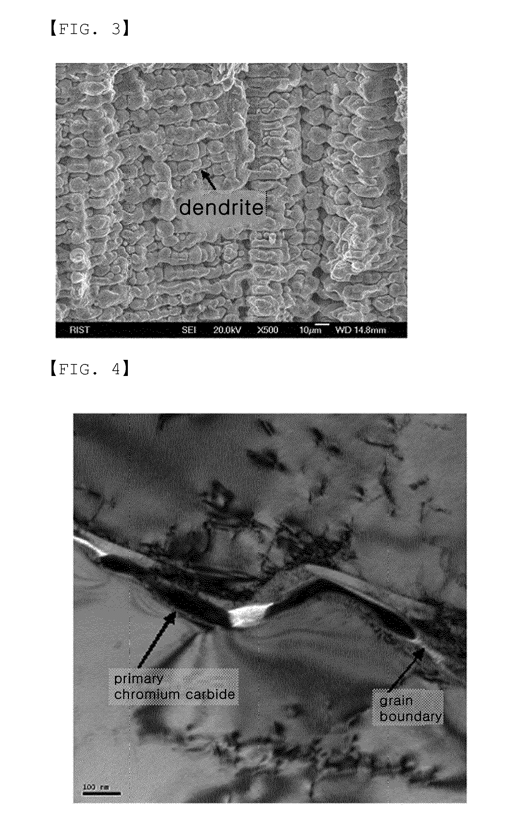

The martensitic stainless steel manufactured by the twin roll strip casting process has no center segregation compared to when the conventional casting process is used. As illustrated in FIG. 4, primary chromium carbides are finely precipitated at grain boundaries thus suppressing cracking and strip breakage. As illustrated in FIGS. 2 and 3, because the primary chromium carbides may cause cracks and strip breakage upon casting, grain boundary strengthening elements are added to maximally suppress the effects of such carbides.

The martensitic stainless steel according to the present invention comprises 0.1 ∼ 1.5% of C, 12 ∼ 15% of Cr, 1% or less of Ni, 0.005 ∼ 0.1% of Ti, and a balance of Fe and other inevitable impurities by wt%. As such, 0.005 ∼ 0.1 wt% of Mo and 0.005 ∼ 1.0 wt% of V may be further added alone or in combination to the steel.

The reason why the amounts of the above components are limited is given below.

C is very effective at enhancing the hardness of stainless steel. If the amount of C is less than 0.1 wt%, the hardness required for martensitic stainless steel cannot be ensured. In contrast, if the amount of C exceeds 1.5 wt%, comparatively coarse primary chromium carbides may be formed thus increasing crack sensitivity and reducing corrosion resistance. Hence, the amount of C is limited to 0.1 ∼ 1.5 wt%.

Cr is added to enhance corrosion resistance. If the amount of Cr is less than 12 wt%, improvements in corrosion resistance become insignificant. In contrast, if the amount of Cr exceeds 15 wt%, corrosion resistance may be improved but strength is high and elongation is low thus deteriorating processability and requiring a relatively high cost. Hence, the amount of Cr is limited to 12 ∼ 15 wt%.

Ni is an element which produces a gamma (γ) phase. If the amount thereof is high, the γ phase is increased and when a coil is air cooled after hot rolling, the formation of the martensitic phase may be promoted and thus strength and hardness may increase whereas elongation may decrease. Hence, the amount of Ni is preferably limited to 1 wt% or less.

Ti which is a grain boundary strengthening element is added to fragment primary chromium carbides of grain boundaries or to finely precipitate them thus suppressing cracking and strip breakage. If the amount of Ti is less than 0.005 wt%, the effects thereof on suppressing cracks and strip breakage of a steel sheet are insignificant. In contrast, if the amount of Ti exceeds 0.1 wt%, there may be clogging wherein the stopper of a tundish is clogged due to Ti-based oxides, undesirably generating casting problems. Hence, the amount of Ti is limited to 0.005 ∼ 0.1 wt%.

Mo and V may be added alone or in combination, and are preferably added in an amount of 0.005 wt% or more to strengthen grain boundaries and enhance corrosion resistance. If the amount thereof exceeds 0.1 wt%, toughness may decrease. Hence, the amounts of Mo and V are limited to 0.005 ∼ 0.1 wt%.

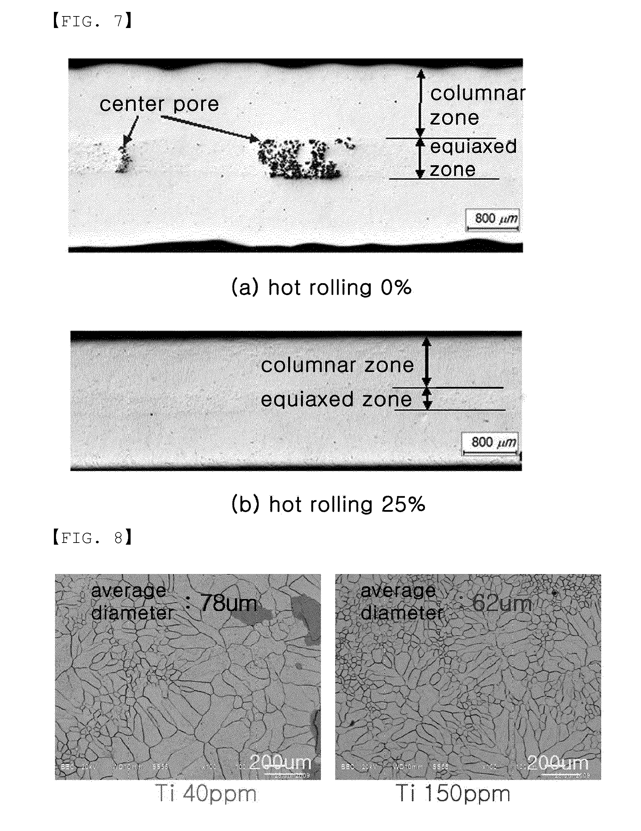

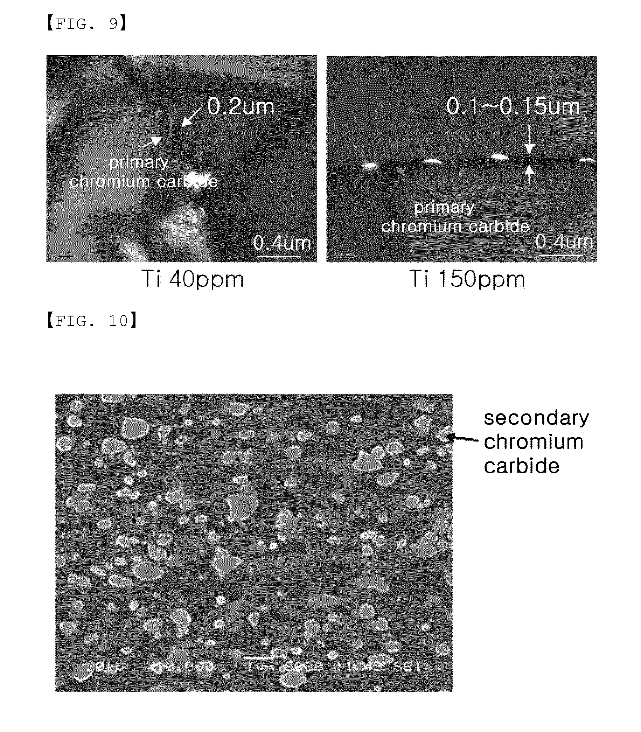

As illustrated in FIGS. 8 and 9, a feature of the martensitic stainless hot rolled steel sheet having the above composition resulting from rolling the strip cast by the twin roll strip casting process using an inline rolling machine is that primary chromium carbides precipitated at grain boundaries are in a band shape and grains are refined and fragmented and discontinuously distributed, so that grain boundaries are strengthened thus suppressing cracks and strip breakage upon casting, consequently obtaining an improved casting completion.

The primary chromium carbides have a thickness of 0.5 µm or less and are mainly distributed in the form of band-shaped refined grains having a size of 0.05 ∼ 0.30 µm.

The martensitic stainless hot rolled steel sheet is hot rolled at a rolling rate of 5 ∼ 50% using the inline rolling machine, and thereby as illustrated in FIG. 7(b), center pores are removed, thus suppressing brittleness due to the pores and ensuring elongation.

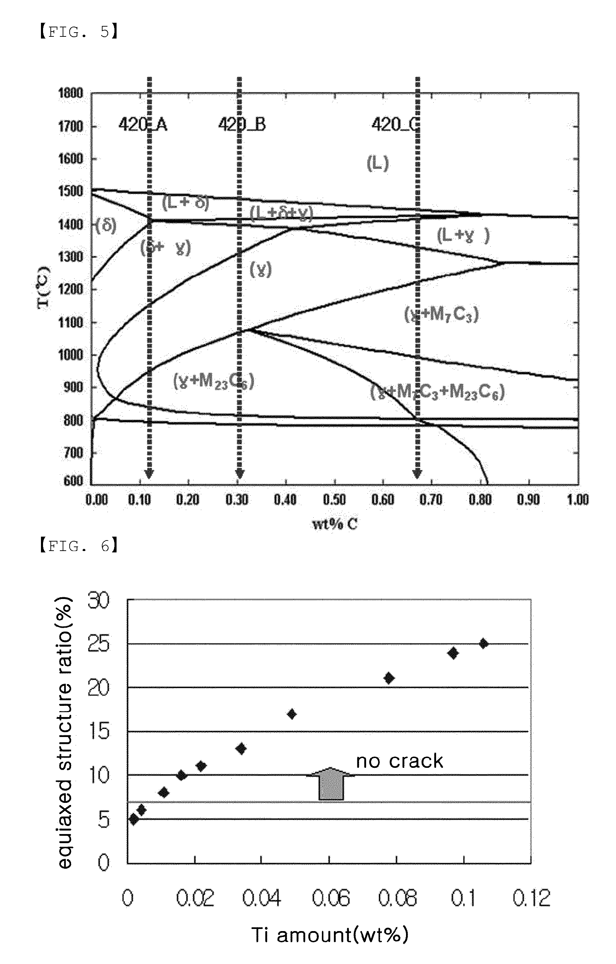

As illustrated in the graph of FIG. 6, as the amount of added Ti increases, the equiaxed structure ratio of the cross-sectional structure of the martensitic stainless hot rolled steel sheet is increased. When the equiaxed structure ratio is increased, center segregation may be decreased, and cracks may be removed. As seen in the graph, when the equiaxed structure ratio of 5% or more is ensured, cracks may be greatly decreased upon casting, and when such a ratio is 7% or more, cracks may be completely removed.

If the equiaxed structure ratio is less than 5%, columnar structures collide with each other thus facilitating the generation of cracks, and upon non-uniform solidification, the generation of cracks may be further increased. It is difficult to technically ensure the equiaxed structure ratio exceeding 30%.

Meanwhile in the present invention, the martensitic stainless hot rolled steel sheet having crack resistance is subjected to BAF and cold rolling, thus producing a martensitic stainless cold rolled steel sheet having high hardness. Also, 0.005 ∼ 0.1 wt% of Mo and 0.005 ∼ 1.0 wt% of V may be further added alone or in combination thereto.

As illustrated in FIG. 10, the martensitic stainless cold rolled steel sheet is provided in the form of secondary chromium carbides being in a spherical shape and finely uniformly distributed, thus obtaining a high-hardness martensitic stainless cold rolled steel sheet, from which tools or knives having edges with high quality may be produced.

The secondary chromium carbides have a size of 5 µm or less, the diameter of which is mostly 0.1 ∼ 3.0 µm, and are uniformly distributed. Also, a refined structure is formed in which there are 30 or more chromium carbides having a size of 5 µm or less per area of 100 µm², thus manufacturing a martensitic stainless cold rolled steel sheet having a high hardness of 100 ∼ 300 Hv, from which tools or knives having edges with high quality may be produced.

Below is a method of manufacturing the martensitic stainless steel according to the present invention with reference to the appended drawings.

The molten steel comprising 0.1 ∼ 1.5% of C, 12 ∼ 15% of Cr, 1% or less of Ni, 0.005 ∼ 0.1% of Ti, and a balance of Fe and other inevitable impurities by wt% is supplied between casting rolls 3 which performs cooling while rotating in opposite directions via a nozzle 2 to solidify it, thus forming a solidified shell, which is then depressed using a roll nip thus producing a strip. As such, 0.005 ∼ 0.1 wt% of Mo and 0.005 ∼ 1.0 wt% of V may be further added alone or in combination to the molten steel.

The strip 7 thus produced is guided by pinch rolls 10 and hot rolled by means of rolling rolls of the inline rolling machine 11 thus forming a martensitic stainless hot rolled steel sheet. As such, when hot rolling is not performed, elongation is not ensured after BAF, and thus the steel sheet becomes brittle to the extent that it is difficult to carry out subsequent processes including pickling and cold rolling. Hence, the method according to the present invention essentially includes hot rolling.

As such, the rolling is preferably carried out at a rolling rate of 5 ∼ 50%. If the rolling rate is less than 5%, pores are formed at the center of the steel sheet, so that the steel sheet becomes brittle due to the pores and the elongation may decrease. In contrast, if the rolling rate exceeds 50%, equipment costs may increase.

FIG. 7 illustrates center pores of the cross-sectional structure of the martensitic stainless steel depending on the rolling rate of hot rolling. As illustrated in FIG. 7(a), pores are formed in an equiaxed zone when hot rolling is not performed, and as illustrated in FIG. 7(b), all the pores are removed from the equiaxed zone when rolling is performed at a rolling rate of 25%.

The hot rolled steel sheet manufactured using the twin roll strip casting process is subjected to BAF to stabilize the solid solution of chromium carbides. Typically the structure of hot rolled steel includes a martensitic phase, a tempered martensitic phase, a ferrite phase, etc., which are mixed together. When the BAF process is carried out, the martensitic phase having oversaturated high-strength carbon may decompose into ferrite and chromium carbides so that steel is made soft, thereby improving processability.

The BAF process is performed in a manner of gradual heating at an annealing temperature of 650 ∼ 950°C in a reducible gas atmosphere and of slow cooling again in a batch type furnace.

If the annealing temperature is less than 650°C, heat treatment effects are insignificant and ductility is not ensured, making it possible for cracks or strip breakage to occur in subsequent processes. In contrast if the annealing temperature exceeds 950°C, re-dissolved chromium carbides may excessively precipitate and the size of the precipitations may partially increase and steel becomes too soft, making it difficult to control chromium carbides. Hence, the annealing temperature is limited to 650 ∼ 950°C.

The steel sheet subjected to heat treatment in the BAF process is pickled and cold rolled and thus transformed into martensitic stainless steel. As such, the cold rolling is performed multiple times and intermediate annealing is performed between multiple times of the cold rolling, so that re-decomposed spherical secondary chromium carbides are finely uniformly distributed thus obtaining a high-hardness martensitic stainless cold rolled steel sheet.

Examples of the present invention are described below.

Martensitic stainless steel comprising the components shown in Table 1 below and a balance of Fe and other impurities was cast into 100-ton strips having a casting width of 1,300 mm and a casting thickness of 2 mm, and hot rolled using an inline rolling machine thus continuously producing hot rolled steel sheets having a thickness of 1 ∼ 2 mm. The results are given in Table 2 below.

**[Table 1]**

| Steel Sheet | Components (wt%) | | | | | | | | | | |
|---|---|---|---|---|---|---|---|---|---|---|---|
| | C | Cr | Ni | Ti | Mo | V | Si | Mn | P | S | N |
| Inventive Steel 1 | 0.357 | 12.21 | - | 0.005 | - | 0.034 | 0.29 | 0.65 | 0.020 | 0.0018 | 0.030 |
| Inventive Steel 2 | 0.448 | 13.22 | - | 0.011 | 0.023 | - | 0.28 | 0.67 | 0.021 | 0.0020 | 0.029 |
| Inventive Steel 3 | 0.553 | 13.19 | - | 0.016 | 0.022 | 0.011 | 0.31 | 0.65 | 0.022 | 0.0018 | 0.029 |
| Inventive Steel 4 | 0.652 | 14.18 | 0.21 | 0.022 | - | - | 0.30 | 0.66 | 0.022 | 0.0019 | 0.030 |
| Inventive Steel 5 | 0.754 | 13.20 | 0.34 | 0.034 | - | - | 0.29 | 0.65 | 0.021 | 0.0020 | 0.030 |
| Inventive Steel 6 | 0.850 | 13.21 | 0.67 | 0.049 | 0.049 | - | 0.30 | 0.64 | 0.020 | 0.0015 | 0.031 |
| Inventive Steel 7 | 0.951 | 14.19 | 0.35 | 0.078 | 0.016 | 0.026 | 0.30 | 0.65 | 0.021 | 0.0018 | 0.029 |
| Inventive Steel 8 | 1.253 | 13.20 | 0.28 | 0.097 | - | 0.042 | 0.31 | 0.64 | 0.020 | 0.0019 | 0.028 |
| Comparative Steel 1 | 0.652 | 13.22 | - | - | - | - | 0.30 | 0.65 | 0.020 | 0.0018 | 0.030 |
| Comparative Steel 2 | 0.653 | 13.20 | - | **0.002** | - | - | 0.28 | 0.66 | 0.022 | 0.0017 | 0.031 |
| Comparative Steel 3 | 0.651 | 13.21 | - | **0.004** | - | - | 0.31 | 0.65 | 0.021 | 0.0020 | 0.030 |
| Comparative Steel 4 | 0.657 | 13.21 | - | **0.127** | - | 0.012 | 0.29 | 0.65 | 0.020 | 0.0018 | 0.029 |
| Comparative Steel 5 | 0.650 | 13.18 | 0.21 | **0.151** | 0.023 | - | 0.30 | 0.66 | 0.021 | 0.0020 | 0.028 |

**[Table 2]**

| Steel Sheet | Average Thickness (µm) of Primary Chromium Carbide | Equiaxed Structure Ratio (%) | Crack Generation | Clogging of Stopper of Tundish | Hot Rolling | |
|---|---|---|---|---|---|---|
| | | | | | Rolling Rate (%) | Pore Generation |
| Inventive Steel 1 | 0.28 | 5.2 | Δ | X | 6 | X |
| Inventive Steel 2 | 0.21 | 7.5 | X | X | 10 | X |
| Inventive Steel 3 | 0.15 | 8.1 | X | X | 15 | X |
| Inventive Steel 4 | 0.14 | 10.3 | X | X | 20 | X |
| Inventive Steel 5 | 0.12 | 12.6 | X | X | 25 | X |
| Inventive Steel 6 | 0.10 | 16.8 | X | X | 30 | X |
| Inventive Steel 7 | 0.07 | 21.7 | X | X | 40 | X |
| Inventive Steel 8 | 0.05 | 25.1 | X | Δ | 48 | X |
| Comparative Steel 1 | 0.74 | 2.8 | ο | X | ο | |
| omparative Steel 2 | 0.61 | 3.2 | ο | | 2 | ο |
| omparative Steel 3 | 0.55 | 3.8 | ο | | 55 | X |
| Comparative Steel 4 | 0.04 | 27.4 | X | ο | 0 | X |
| Comparative Steel 5 | 0.03 | 29.2 | X | ο | 5 | X |

| | | | | | | |
|---|---|---|---|---|---|---|
| * Generation of cracks: 0 (poor), Δ (good), X (no generation) * Clogging of stopper of tundish: 0 (clogging), Δ (good), X (excellent) | | | | | | |

As is apparent from Tables 1 and 2, Inventive Steels 1 to 8 wherein the amounts of components of steel including Ti and so on as grain boundary strengthening elements fall in the ranges of the present invention had primary chromium carbides having a thickness of 0.5 µm or less which were finely precipitated at grain boundaries, and could ensure an equiaxed structure ratio of 5 ∼ 30%, so that cracks were not generated or the extent of crack generation was good. Furthermore, the stopper of the tundish did not clog thus exhibiting superior castability.

However, Comparative Steels 1 to 3 wherein Ti is not added or is added in a very small amount had cracks propagated along the grain boundaries, and Comparative Steels 4 and 5 wherein an excess of Ti is added did not generate cracks but caused clogging due to Ti-based oxides making it difficult to apply casting.

As is apparent from Table 2, when the rolling rate of 5 ∼ 50% was applied upon hot rolling as in Inventive Steels 1 to 8, pores of the central portion of steel were removed thus suppressing brittleness and ensuring elongation.

The martensitic stainless hot rolled steel sheet thus manufactured was pickled and then subjected to BAF for a long period of time at 650 ∼ 950°C, followed by conducting cold rolling multiple times and intermediate annealing between multiple times of the cold rolling. Ultimately, as illustrated in the distribution of secondary chromium carbides of the martensitic stainless cold rolled steel sheet of FIG. 10, chromium carbides were precipitated in a spherical shape and were thus finely uniformly distributed, and also chromium carbides having a diameter of 5 µm or more were not observed in such a refined structure. The martensitic stainless steel having the above refined structure has a very high hardness of 100 ∼ 300 Hv, from which tools or knives having edges with high quality can be produced.

## Claims

1. A martensitic stainless hot rolled steel sheet having superior crack resistance, manufactured by a twin roll strip casting process and comprising 0.1 ∼ 1.5% of C, 12 ∼ 15% of Cr, 1% or less of Ni, 0.005 ∼ 0.1% of Ti, and a balance of Fe and other inevitable impurities by wt%, wherein primary chromium carbides precipitated at grain boundaries are fragmented and refined.

2. The martensitic stainless hot rolled steel sheet of claim 1, further comprising either or both of 0.005 ∼ 0.1 wt% of Mo and 0.005 ∼ 1.0 wt% of V.

3. The martensitic stainless hot rolled steel sheet of claim 1, wherein the primary chromium carbides have a thickness of 0.5 µm or less.

4. The martensitic stainless hot rolled steel sheet of claim 1, wherein center pores are removed from the martensitic stainless hot rolled steel sheet.

5. The martensitic stainless hot rolled steel sheet of claim 1, wherein an equiaxed structure ratio of a cross-sectional structure of the martensitic stainless hot rolled steel sheet is 5 ∼ 30%.

6. A martensitic stainless cold rolled steel sheet having high hardness, manufactured by a twin roll strip casting process and comprising 0.1 ∼ 1.5% of C, 12 ∼ 15% of Cr, 1% or less of Ni, 0.005 ∼ 0.1% of Ti, and a balance of Fe and other inevitable impurities by wt%, wherein spherical secondary chromium carbides are finely distributed.

7. The martensitic stainless cold rolled steel sheet of claim 6, further comprising either or both of 0.005 ∼ 0.1 wt% of Mo and 0.005 ∼ 1.0 wt% of V.

8. The martensitic stainless cold rolled steel sheet of claim 6, wherein the secondary chromium carbides have a size of 5 µm or less, and there are 30 or more chromium carbides having the size of 5 µm or less per area of 100 µm².

9. The martensitic stainless cold rolled steel sheet of claim 6, wherein the hardness of the martensitic stainless cold rolled steel sheet is 100 ∼ 300 Hv.

10. A method of manufacturing a martensitic stainless cold rolled steel sheet having high hardness, comprising:
casting molten steel comprising 0.1 ∼ 1.5% of C, 12 ∼ 15% of Cr, 1% or less of Ni, 0.005 ∼ 0.1% of Ti, and a balance of Fe and other inevitable impurities by wt% into a strip in a twin roll strip casting process;
rolling the strip at a rolling rate of 5 ∼ 50% using an inline rolling machine thus producing a hot rolled steel sheet; and
subjecting the hot rolled steel sheet to a BAF (Batch Annealing Furnace) process at 650 ∼ 950°C in a reducible gas atmosphere, and then to cold rolling,
wherein the cold rolling is performed multiple times and intermediate annealing is performed between multiple times of the cold rolling.

11. The method of claim 10, wherein the molten steel further comprises either or both of 0.005 ∼ 0.1 wt% of Mo and 0.005 ∼ 1.0 wt% of V.
